# EUROPEAN PATENT SPECIFICATION

(11) **EP 4 006 317 B1**
(45) Date of publication and mention of the grant of the patent: **25.06.2025**
(21) Application number: 21150584.7
(22) Date of filing: 07.01.2021
(51) Int. Cl.: F01D 21/00, B64C 13/00, B64F 5/60

(54) **MODELING AND INTEGRATING AIRCRAFT ENGINE INSTALLATION DELTAS**
MODELLIERUNG UND INTEGRATION VON FLUGTRIEBWERKINSTALLATIONSDELTAS
MODÉLISATION ET INTÉGRATION DE DELTAS D'INSTALLATION DE MOTEUR D'AÉRONEF

(30) Priority: 30.11.2020 US 202017107048
(43) Date of publication of application: 01.06.2022
(73) Proprietor: Textron Innovations Inc., Providence, Rhode Island 02903 (US)
(72) Inventor: SIEMSEN, Mark Allen, Fort Worth, TX 76155 (US); TJANDRA, Albertus Muljadi, Mirabel, Québec J7J 1R4 (CA)
(74) Representative: Barker Brettell LLP

(56) References cited:
- EP-A1- 3 444 187
- US-A1- 2004 154 385
- US-A1- 2013 204 468
- US-A1- 2017 341 771
- US-A1- 2019 244 443
- US-A1- 2020 332 723
- US-B1- 8 490 404

## Description

### BACKGROUND

### Technical Field

The present disclosure relates generally to a computer-implemented method for modeling and integrating engine installation deltas.

### History of Related Art

A rotorcraft may include one or more rotor systems including one or more main rotor systems. A main rotor system generates aerodynamic lift to support the weight of the rotorcraft in flight and thrust to move the rotorcraft in forward flight. Another example of a rotorcraft rotor system is a tail rotor system. A tail rotor system may generate thrust in the same direction as the main rotor system's rotation to counter the torque effect created by the main rotor system. Both rotor systems are driven using torque (or power) produced by engine(s). For smooth and efficient flight in a rotorcraft, a pilot balances the engine power, main rotor collective thrust, main rotor cyclic thrust and the tail rotor thrust, and a control system may assist the pilot in stabilizing the rotorcraft and reducing pilot workload. The systems for engines, transmissions, drive system, rotors, and the like, are critical to the safe operation of the rotorcraft in flight. The elements of system such as mechanical systems, electrical systems, hydraulic systems, and the like, are each subject to unique wear factors and monitoring, inspection or maintenance requirements.

US 2020/0332723 A1 discloses a checking method for checking a power plant of an aircraft, in which the current power actually being developed by the engine is determined without making any allowance for any power losses resulting from the engine being installed in the aircraft or from a level of clogging of a filter, the check being successful when the current power is greater than or equal to a guaranteed minimum power.

US 2013/0204468 A1 discloses a method or performing a health check of a turbine engine in which, during a development step, installation losses are quantified for test values for a reduced speed of rotation of a gas generator of the engine and, during an acquisition step, the speed of rotation is increased until the engine develops a maximum power and then decreased until the speed of rotation reaches a test value. A monitoring value is acquired when the aircraft is stabilized. During an evaluation step a margin is determined using a monitoring value and the effects of mounting the engine in an airplane.

EP 3444187 A1 discloses a system and method for rotorcraft collective power hold, in which a position set signal is sent to provide a power hold to a trim assembly of the rotorcraft to set a first position of a pilot control connected to the trim assembly according to a pilot control setting generated according to a flight parameter and a flight control device is controlled according to the position of the pilot control.

US 2004/0154385 A1 discloses a turbine engine differential-pressure torque measurement system, in which a torque signal is generated from a differential gas pressure measured across the power turbine, the pressure differential being input to a processor which processes it in a predetermined fashion along with the rotational speed signal of the power turbine, initial pressure and the temperature measurements of the air as the air is initially inlet into the engine, the result of the processing being various engine parameter indications including the torque.

US 2019/0244443 A1 discloses a system and algorithm-based method of determining engine health and assuring available propulsion power based on historical data reflecting the individual engine's unique performance fingerprint.

### SUMMARY

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

In accordance with the invention defined by the appended claims, there is provided a computer-implemented method of modeling and integrating aircraft engine installation deltas, a computer system comprising a computer including a processor and memory, wherein the processor and the memory in combination are operable to perform the method, and a computer-program product comprising instructions which, when executed by the computer, cause the computer to carry out the method.

### BRIEF DESCRIPTION OF THE DRAWINGS

A more complete understanding of the method and apparatus of the present disclosure may be obtained by reference to the following Detailed Description when taken in conjunction with the accompanying Drawings wherein:
FIG. 1 illustrates an example of a rotorcraft;
FIG. 2 illustrates an example of a fly-by-wire flight control system for a rotorcraft;
FIG. 3 illustrates an example of a computing environment;
FIG. 4 illustrates example operation of a modeling integration system;
FIG. 5 illustrates an embodiment of a process for modeling and integrating engine installation deltas according to the present invention;
FIG. 6 illustrates an example of a process for generating a mathematical model; and
FIG. 7 illustrates an example of a computer system.

### DETAILED DESCRIPTION

While the making and using of various embodiments of the present disclosure are discussed in detail below, it should be appreciated that the present disclosure provides many applicable concepts, which can be embodied in a wide variety of specific contexts. The specific embodiments discussed herein are merely illustrative and do not delimit the scope of the present disclosure. In the interest of clarity, not all features of an actual implementation may be described in the present disclosure. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present disclosure, the devices, members, apparatuses, and the like described herein may be positioned in any desired orientation. Thus, the use of terms such as "above," "below," "upper," "lower" or other like terms to describe a spatial relationship between various components or to describe the spatial orientation of aspects of such components should be understood to describe a relative relationship between the components or a spatial orientation of aspects of such components, respectively, as the device described herein may be oriented in any desired direction. In addition, as used herein, the term "coupled" may include direct or indirect coupling by any means, including moving and/or non-moving mechanical connections.

Illustrative embodiments of the system and method of the present disclosure are described below. In the interest of clarity, all features of an actual implementation may not be described in this specification. It will of course be appreciated that in the development of any such actual embodiment, numerous implementation-specific decisions may be made to achieve the developer's specific goals, such as compliance with system-related and business-related constraints, which will vary from one implementation to another. Moreover, it should be appreciated that such a development effort might be complex and time-consuming but would nevertheless be a routine undertaking for those of ordinary skill in the art having the benefit of this disclosure.

The increasing use of rotorcraft, in particular, for commercial and industrial applications, has led to the development of larger more complex rotorcraft. However, as rotorcraft become larger and more complex, the differences between flying rotorcraft and fixed wing aircraft has become more pronounced. Since rotorcraft use one or more main rotors to simultaneously provide lift, control attitude, control altitude, and provide lateral or positional movement, different flight parameters and controls are tightly coupled to each other, as the aerodynamic characteristics of the main rotors affect each control and movement axis. For example, the flight characteristics of a rotorcraft at cruising speed or high speed may be significantly different than the flight characteristics at hover or at relatively low speeds. Additionally, different flight control inputs for different axes on the main rotor, such as cyclic inputs or collective inputs, affect other flight controls or flight characteristics of the rotorcraft. For example, pitching the nose of a rotorcraft forward to increase forward speed will generally cause the rotorcraft to lose altitude. In such a situation, the collective may be increased to maintain level flight, but the increase in collective requires increased power at the main rotor which, in turn, requires additional anti-torque force from the tail rotor. This is in contrast to fixed wing systems where the control inputs are less closely tied to each other and flight characteristics in different speed regimes are more closely related to each other.

Recently, fly-by-wire (FBW) systems have been introduced in rotorcraft to assist pilots in stably flying the rotorcraft and to reduce workload on the pilots. The FBW system may provide different control characteristics or responses for cyclic, pedal or collective control input in the different flight regimes, and may provide stability assistance or enhancement by decoupling physical flight characteristics so that a pilot is relieved from needing to compensate for some flight commands issued to the rotorcraft. FBW systems may be implemented in one or more flight control computers (FCCs) disposed between the pilot controls and flight control systems, providing corrections to flight controls that assist in operating the rotorcraft more efficiently or that put the rotorcraft into a stable flight mode while still allowing the pilot to override the FBW control inputs. The FBW systems in a rotorcraft may, for example, automatically adjust power output by the engine to match a collective control input, apply collective or power correction during a cyclic control input, provide automation of one or more flight control procedures, provide for default or suggested control positioning, or the like.

As power outputs are adjusted and utilized by a pilot or FBW system, it is important to have an accurate picture of an engine power situation including, for example, reliable indications of power available, power required, and power margin. Power available, often measured in horsepower or reduced to a rating or metric representative of the same, indicates power that can be reliably produced by an engine. Power available can be different in dependence on the extent to which the value is time-limited. For example, power available can be indicative of continuous power without a specific time limitation. In another example, power available can be indicative of power for specific time-limited situations that cover, for example, two and one-half minutes, two minutes, a half minute, combinations of the foregoing and/or the like. Power required, also often measured in horsepower or reduced to a rating or metric representative of the same, indicates power that is required for operation under specified conditions (e.g., a hover operation for rotorcraft). In general, power margin is a difference between published power available and actual power available under specified conditions.

Accurately representing an engine power situation is technically challenging. Manufacturer engine specifications often provide power ratings and other data related to engine performance. However, this data is usually based on engine performance in an uninstalled state and thus does not accurately reflect, for example, power available after the engine has been installed in a vehicle such as a rotorcraft or other aircraft. In most cases, an installed engine produces less power than an uninstalled engine. This power discrepancy as compared to the uninstalled engine is often caused by factors such as, for example, inlet pressure drop, inlet temperature rise, or exhaust backpressure. The aforementioned power discrepancy and its related causal factors are referred to herein as engine installation deltas (EIDs). Most commonly, EIDs represent losses, although gains may occur in some cases if engine specifications are overly conservative or inaccurate. EIDs are difficult to address because, among other technical problems, they do not necessarily occur the same way or to the same degree for each engine or vehicle.

The present disclosure describes examples of modeling EIDs and integrating such modeling with systems that profile engines. For illustrative purposes, various principles will be described herein relative to rotorcraft. However, one skilled in the art will be appreciate that these principles can similarly be applied to engines for other aircraft or other vehicles.

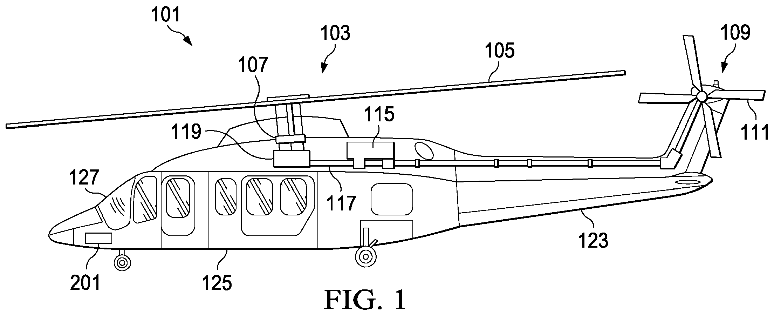

FIG. 1 illustrates a rotorcraft 101. The rotorcraft 101 has a main rotor system 103, which includes a plurality of main rotor blades 105. The pitch of each main rotor blade 105 may be controlled by a swashplate 107 in order to selectively control the attitude, altitude and movement of the rotorcraft 101. The swashplate 107 may be used to collectively and/or cyclically change the pitch of the main rotor blades 105. The rotorcraft 101 also has an anti-torque system, which may include a tail rotor 109, no-tail-rotor (NOTAR), or dual main rotor system. In rotorcraft with a tail rotor 109, the pitch of each tail rotor blade 111 is collectively changed in order to vary thrust of the anti-torque system, providing directional control of the rotorcraft 101. The pitch of the tail rotor blades 111 is changed by one or more tail rotor actuators. The FBW system sends electrical signals to the tail rotor actuators or main rotor actuators to control flight of the rotorcraft.

Power is supplied to the main rotor system 103 and the anti-torque system by engines 115. There may be one or more engines 115, which may be controlled according to signals from the FBW system. The output of the engine 115 is provided to a driveshaft 117, which is mechanically and operatively coupled to the main rotor system 103 and the anti-torque system through a main rotor transmission 119 and a tail rotor transmission, respectively.

The rotorcraft 101 further includes a fuselage 125 and tail section 123. The tail section 123 may have other flight control devices such as horizontal or vertical stabilizers, rudder, elevators, or other control or stabilizing surfaces that are used to control or stabilize flight of the rotorcraft 101. The fuselage 125 includes a cockpit 127, which includes displays, controls, and instruments. It should be appreciated that even though rotorcraft 101 is depicted as having certain illustrated features, the rotorcraft 101 may have a variety of implementation-specific configurations. Cockpit 127 may be configured to accommodate a pilot or a pilot and co-pilot, as illustrated. It is also contemplated, however, that rotorcraft 101 may be operated remotely, in which case cockpit 127 could be configured as a fully functioning cockpit to accommodate a pilot (and possibly a co-pilot as well) to provide for greater flexibility of use, or could be configured with a cockpit having limited functionality (e.g., a cockpit with accommodations for only one person who would function as the pilot operating perhaps with a remote co-pilot or who would function as a co-pilot or backup pilot with the primary piloting functions being performed remotely. Rotorcraft 101 could be configured as an unmanned vehicle, in which case cockpit 127 could be eliminated entirely in order to save space and cost.

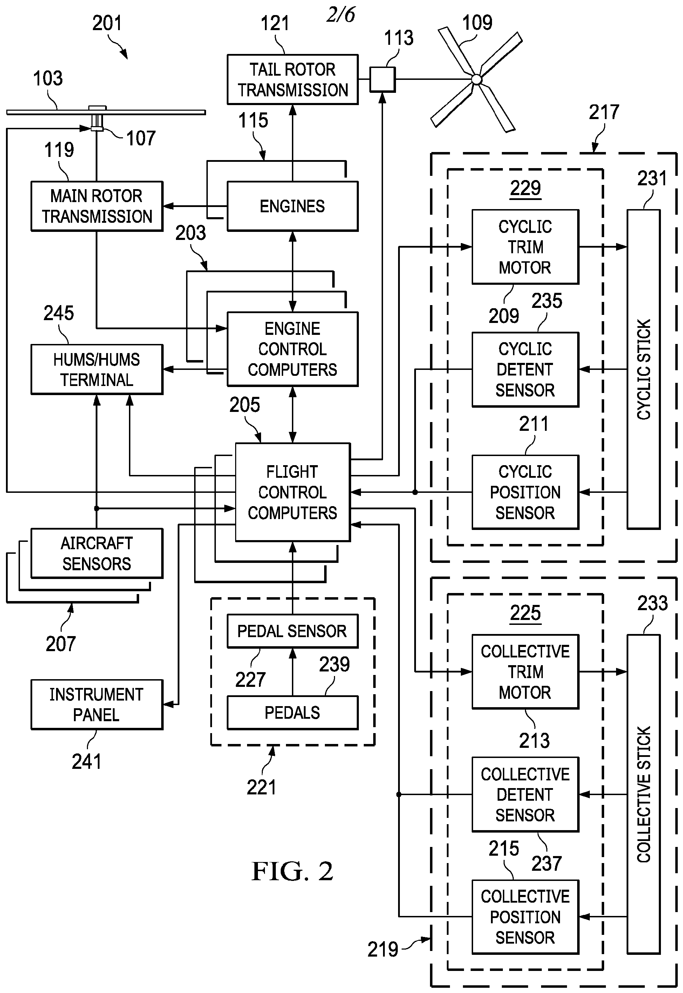

FIG. 2 illustrates a FBW flight control system 201 for a rotorcraft. A pilot may manipulate one or more pilot flight controls in order to control flight of the rotorcraft. The pilot flight controls may include manual controls such as a cyclic stick 231 in a cyclic control assembly 217, a collective stick 233 in a collective control assembly 219, and pedals 239 in a pedal control assembly 221. Inputs provided by the pilot to the pilot flight controls may be transmitted mechanically and/or electronically (e.g., via the FBW flight control system) to flight control devices by the FBW flight control system 201. Flight control devices may represent devices operable to change the flight characteristics of the rotorcraft. Flight control devices on the rotorcraft may include mechanical and/or electrical systems operable to change the positions or angle of attack of the main rotor blades 105 and the tail rotor blades in or to change the power output of the engines 115, as examples. Flight control devices include systems such as the swashplate 107, tail rotor actuator 113, and systems operable to control the engines 115. The FBW flight control system 201 may adjust the flight control devices independently of the flight crew in order to stabilize the rotorcraft, reduce workload of the flight crew, and the like. The FBW flight control system 201 includes engine control computers (ECCUs) 203, flight control computers (FCCs) 205, and aircraft sensors 207, which collectively adjust the flight control devices and monitors the rotorcraft during operation.

The FBW flight control system 201 has one or more FCCs 205. Multiple FCCs 205 may be provided for redundancy. One or more modules within the FCCs 205 may be partially or wholly embodied as software and/or hardware for performing any functionality described herein. Where the FBW flight control system 201 is a FBW flight control system, the FCCs 205 may analyze pilot inputs and dispatch corresponding commands to the ECCUs 203, the tail rotor actuator 113, and/or actuators for the swashplate 107. Further, the FCCs 205 are configured and receive input commands from the pilot controls through sensors associated with each of the pilot flight controls. The input commands are received by measuring the positions of the pilot controls. The FCCs 205 also control tactile cues to the pilot controls or display information in instruments on, for example, an instrument panel 241.

The ECCUs 203 control the engines 115. For example, the ECCUs 203 may vary the output power of the engines 115 to control the rotational speed of the main rotor blades or the tail rotor blades. The ECCUs 203 may control the output power of the engines 115 according to commands from the FCCs 205, or may do so based on feedback such as measured revolutions per minute (RPM) of the main rotor blades.

The cyclic control assembly 217 is connected to a cyclic trim assembly 229 having one or more cyclic position sensors 211, one or more cyclic detent sensors 235, and one or more cyclic actuators or cyclic trim motors 209. The cyclic position sensors 211 measure the position of the cyclic stick 231. The cyclic stick 231 may be a single control stick that moves along two axes and permits a pilot to control pitch, which is the vertical angle of the nose of the rotorcraft and roll, which is the side-to-side angle of the rotorcraft. The cyclic control assembly 217 may have separate cyclic position sensors 211 that measuring roll and pitch separately. The cyclic position sensors 211 for detecting roll and pitch generate roll and pitch signals, respectively, (sometimes referred to as cyclic longitude and cyclic latitude signals, respectively) which are sent to the FCCs 205, which controls the swashplate 107, engines 115, tail rotor 109 or related flight control devices.

The cyclic trim motors 209 are connected to the FCCs 205, and receive signals from the FCCs 205 to move the cyclic stick 231. The FCCs 205 may determine a suggested cyclic stick position for the cyclic stick 231 according to one or more of the collective stick position, the pedal position, the speed, altitude and attitude of the rotorcraft, the engine RPM, engine temperature, main rotor RPM, engine torque or other rotorcraft system conditions or flight conditions, or according to a predetermined function selected by the pilot. The suggested cyclic stick position is a position determined by the FCCs 205 to give a desired cyclic action. The FCCs 205 may send a suggested cyclic stick position signal indicating the suggested cyclic stick position to the cyclic trim motors 209. While the FCCs 205 may command the cyclic trim motors 209 to move the cyclic stick 231 to a particular position (which would in turn drive actuators associated with swashplate 107 accordingly), the cyclic position sensors 211 detect the actual position of the cyclic stick 231 that is set by the cyclic trim motors 206 or input by the pilot, allowing the pilot to override the suggested cyclic stick position. The cyclic trim motor 209 is connected to the cyclic stick 231 so that the pilot may move the cyclic stick 231 while the trim motor is driving the cyclic stick 231 to override the suggested cyclic stick position. Thus, the FCCs 205 may receive a signal from the cyclic position sensors 211 indicating the actual cyclic stick position, and do not rely on the suggested cyclic stick position to command the swashplate 107.

Similar to the cyclic control assembly 217, the collective control assembly 219 is connected to a collective trim assembly 225 having one or more collective position sensors 215, one or more collective detent sensors 237, and one or more collective actuators or collective trim motors 213. The collective position sensors 215 measure the position of a collective stick 233 in the collective control assembly 219. The collective stick 233 may be a single control stick that moves along a single axis or with a lever type action. A collective position sensor 215 detects the position of the collective stick 233 and sends a collective position signal to the FCCs 205, which controls engines 115, swashplate actuators, or related flight control devices according to the collective position signal to control the vertical movement of the rotorcraft. The FCCs 205 may send a power command signal to the ECCUs 203 and a collective command signal to the main rotor or swashplate actuators so that the angle of attack of the main blades is raised or lowered collectively, and the engine power is set to provide the needed power to keep the main rotor RPM substantially constant.

The collective trim motor 213 is connected to the FCCs 205, and receives signals from the FCCs 205 to move the collective stick 233. Similar to the determination of the suggested cyclic stick position, the FCCs 205 may determine a suggested collective stick position for the collective stick 233 according to one or more of the cyclic stick position, the pedal position, the speed, altitude and attitude of the rotorcraft, the engine RPM, engine temperature, main rotor RPM, engine torque or other rotorcraft system conditions or flight conditions, or according to a predetermined function selected by the pilot. The FCCs 205 generate the suggested collective stick position and send a corresponding suggested collective stick signal to the collective trim motors 213 to move the collective stick 233 to a particular position. The collective position sensors 215 detect the actual position of the collective stick 233 that is set by the collective trim motor 213 or input by the pilot, allowing the pilot to override the suggested collective stick position.

The pedal control assembly 221 has one or more pedal sensors 227 that measure the position of pedals or other input elements in the pedal control assembly 221. The pedal control assembly 221 may be free of a trim motor or actuator, and may have a mechanical return element that centers the pedals when the pilot releases the pedals. The pedal control assembly 221 may alternatively have one or more trim motors that drive the pedal to a suggested pedal position according to a signal from the FCCs 205. The pedal sensor 227 detects the position of the pedals 239 and sends a pedal position signal to the FCCs 205, which controls the tail rotor 109 to cause the rotorcraft to yaw or rotate around a vertical axis.

The cyclic and collective trim motors 209 and 213 may drive the cyclic stick 231 and collective stick 233, respectively, to suggested positions. The cyclic and collective trim motors 209 and 213 may drive the cyclic stick 231 and collective stick 233, respectively, to suggested positions, but this movement capability may also be used to provide tactile cueing to a pilot. Additionally, the cyclic control assembly 217, collective control assembly 219 and/or pedal control assembly 221 may each have one or more detent sensors that determine whether the pilot is handling a particular control device. The FCCs 205 may provide different default control or automated commands to one or more flight systems based on the detent status of a particular stick or pilot control.

The aircraft sensors 207 may be in communication with the FCCs 205 and/or a health and usage monitoring system (HUMS) 245. The aircraft sensors 207 may include sensors for monitoring operation of the rotorcraft, providing pilot data, providing operational data, or the like, and may include measuring a variety of rotorcraft systems, operating conditions, flight parameters, environmental conditions and the like. For example, the aircraft sensors 207 may include sensors for gathering flight data, and may include sensors for measuring airspeed, altitude, attitude, position, orientation, temperature, airspeed, vertical speed, and the like. The aircraft sensors 207 may include sensors relying upon data or signals originating external to the rotorcraft, such as a global positioning system (GPS) sensor, a very high frequency (VHF) omnidirectional range sensor, Instrument Landing System (ILS), and the like. The aircraft sensors 207 may also include sensors for reading operational data such as vibration, device rotational speed, electrical operating characteristics, fluid flows, or the like.

The FBW flight control system 201 may further include the HUMS 245 or a HUMS terminal. The HUMS 245 may collect data from FBW flight control system 201 elements for storage and later download, analysis, or the like. The HUMS 245 may be connected to one or more aircraft sensors 207, FCCs 205, ECCUs 203, standalone sensors, sensors integrated into the HUMS, or other system components, or a combination of components. The HUMS 245 may be separate from the FCCs 205, and may be implemented as a standalone system that communicates with, but that is operationally separate from, other elements of the FBW flight control system 201. The HUMS 245 may be a terminal that stores raw data from one or more aircraft components, and provides the raw data to a server for interpretation and analysis. The HUMS 245 may interpret raw data to determine one or more condition indicators for a server or other system that analyzes or displays the data. The HUMS 245 may analyze the raw data or condition indicators to determine a trend or problem with a data set, and may display or indicate the interpreted data, a warning, a system status, or like, on the instrument panel 241, on a dedicated display, through an audible warning, within another display such as a flight director display, though a tactile feedback system, or the like. The HUMS 245 may use data from the aircraft sensor 207 to determine an operating condition.

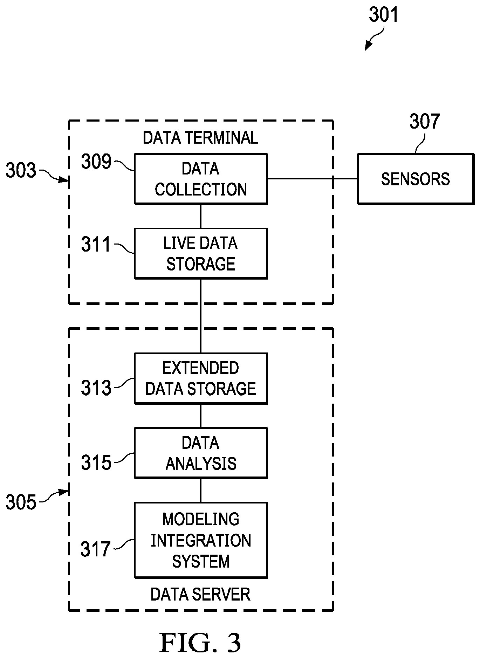

FIG. 3 is a block diagram illustrating an example computing environment 301 for EID modeling and integration. The computing environment 301 includes a data terminal 303 that is connected to one or more sensors 307 and a data server 305. The sensors 307 are aircraft sensors, as discussed above, and take sensor readings and generate one or more sensor signals such as electrical signals, data elements, or the like, that indicate one or more operational conditions.

The data terminal 303 may be a computer or other device that receives the sensor signals and stores the sensor signals locally for later analysis. One or more of the HUMS terminal, the FCCs or ECCUs may be data terminals 303. The data terminal 303 has a data collection element 309 that is a data handling element such as a processor, data collection circuit or device, or the like. The data terminal 303 may be a HUMS terminal that is a centralized device or standalone device that collects raw data from the sensors 307 and that generates condition indicator data from the raw data signals, or that collects condition indicator data from the sensors 307. The data terminal 303 may be a HUMS terminal that receives calculated or analyzed data such as alerts, trends, or the like from smart sensors 307 that determine condition indicators and perform analysis on the condition indicators. The data terminal 303 may be, or include, a network of smart sensors 307 that act autonomously to collect data, and may determine condition indicators and perform some analysis of the condition indicator data. The smart sensors 307 may store the collected and calculated data or analysis for delivery directly to the data server 305. The data collection element 309 may also include a communications circuit that receives the sensor signal from the sensors 307 and provides the raw sensor signal to the data collection element 309, which saves a condition indicator value based on the raw sensor signal in live data storage 311.

The data terminal 303 may store the sensor signal as the condition indicator in the live data storage 311. The data terminal 303 may process the raw sensor signal to generate a condition indicator based on, or according to, the raw sensor signal before storing the condition indicator. The data terminal 303 may actively query a sensor 307, may receive a signal from a sensor 307, or may sample a signal from a sensor 307 to acquire a raw data signal or sensor signal. The data terminal 303 may acquire the data signal at a particular time in a flight or in response to one or more operating conditions meeting a predetermined set of criteria. Thus, each condition indicator data set may be associated with an operating condition. The data terminal 303 may acquire a data signal, by sampling a continuous or live signal, or querying a sensor, when the data terminal 303 detects that flight conditions or operating conditions meet one or more criteria. For example, the data terminal 303 may be an FCC, and may determine that the engines are in a maximum takeoff power (MTOP) state based on the throttle and collective settings, and may acquire a data signal indicating, for example, vibrations of one or more components of an engine, transmission, gear train, or the like, or for fuel flow, power generation, transmission torque, or the like. **In** another example, the data terminal 303 may determine that the rotorcraft is in a hover, in forward flight, or in another flight state, and may acquire the data signal during the flight state. Condition indicator data sets may be formed from measurements or condition indicators determined in relation to similar operating conditions to provide consistent data. For example, a first condition indicator data set may include condition indicators for a main rotor transmission gear during MTOP across multiple flights, while a second condition indicator data set may include condition indicators for the same main rotor transmission gear during hover across multiple flights.

The data terminal 303 may store the data signal, a sample of the data signal, condition indicators, and other sensor data or relevant identifying information in the live data storage 311. The data signal or condition indicator may be tagged with a date, time, and operating condition indicator information when stored in the live data storage 311 for later transmission to the data server 305.

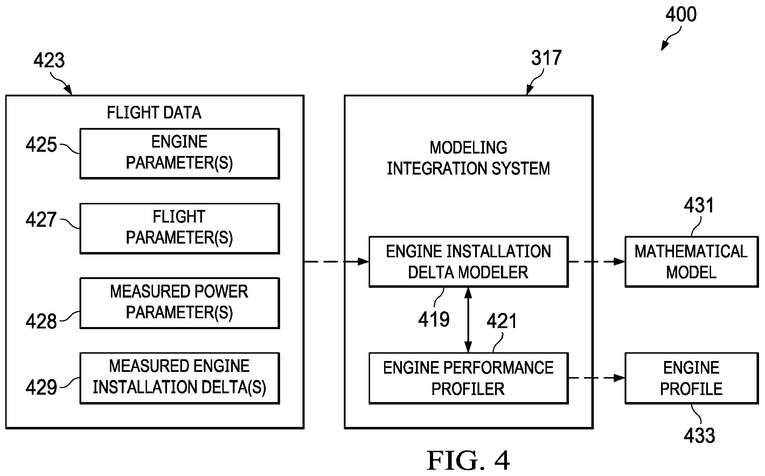

The data server 305 aggregates data from one or more data terminals 303. The data server 305 collects data in one or more condition indicator data sets for aggregation and analysis, and may provide a report, alerts or other information for individual condition indicators data sets. The data server 305 stores condition indicators and/or other information in extended data storage 313. A data analysis element 315 reads condition indicator information, performs analysis or detection on the condition indicators, and saves resultant information into the extended data storage 313. A modeling integration system 317 periodically receives condition indicator data and other data and, thereafter, models EIDs and integrates such modeling with systems that profile engines. The modeling integration system 317 will be described in greater detail relative to FIG. 4.

The data server 305 may be, for example, a server that is remote from the data terminal 303, or may be local to, or the same device as the data terminal 303. The data terminal 303 and data server 305 may be both disposed in a vehicle such as a rotorcraft, and may both be implemented in one or more FCCs. The data terminal 303 may be implemented in a device that is distinct from the device implementing the data server 305. For example, the data terminal 303 may be implemented in a dedicated monitoring computer or device using, for example, a purpose built processor, microcontroller, or the like, or may be implemented in an ECCU or other control computer, while the data server 305 is implemented in, for example, an FCC. The data server 305 may be a diagnostic computer, remote server, or the like, that is separate from the vehicle on which the data terminal 303 is disposed. The data terminal 303 may transfer data to the data server 305 by responding to query from a maintenance computer, automatically transferring data to a remote data server 305 through a wireless connection, a manual transfer or download by a user using, for example, a non-transitory computer readable medium such as a universal serial bus (USB) stick or secure digital (SD) card, or the like.

The data terminal 303 collects a series of condition indicators for each operating condition that the data server 305 monitors. The data server 305 may receive raw sensor data or a data signal from the data terminal 303, or from the sensors 307, and perform analysis to isolate condition indicators from the data signal or raw sensor data. The data terminal 303 may perform the analysis and send a processed data signal such as a condition indicator, data signal sample, or the like to the data server 305.

FIG. 4 illustrates operation of the modeling integration system 317. The modeling integration system 317 includes an EID modeler 419 and an engine performance profiler 421. The EID modeler 419 is configured to generate and validate a mathematical model 431 of EIDs as a function of flight data 423. The engine performance profiler 421, potentially in combination with the EID modeler 419, is configured to generate an engine profile 433 using the mathematical model 431.

In general, the flight data 423 can include condition indicator data of the type described above relative to FIGS. 1-3. More specifically, the flight data 423 can include values for engine parameters 425, flight parameters 427, power parameters 428, and measured EIDs 429. The engine parameters 425 can include any measurement related to operation of an engine such as one or more of the engines 115. The engine parameters 425 can include, for example, engine horsepower, engine torque, measured gas temperature (MGT), corrected measured gas temperature (MGTc), gas generator speed (Ng), corrected gas generator speed (Ngc), combinations of the foregoing and/or the like. The flight parameters 427 can include, for example, any measurement indicative of conditions during a flight or under which the engine operates such as, for example, outside air temperature, altitude, pressure altitude (Hp), mission data, operational modes of an aircraft, combination of the foregoing and/or the like. The power parameters 428 can include information about a power situation on the rotorcraft 101 of FIG. 1 such as, for example, power available, power required, power margin, combinations of the foregoing and/or the like.

The measured EIDs 429 can include data indicative of EIDs such as, for example, generator load on the engine, measured bleed air drawn from the engine, inlet pressure, inlet pressure change (e.g., drop in a loss scenario), inlet temperature, inlet temperature change (e.g., temperature rise in a loss scenario), or exhaust backpressure, where engine exhaust back pressure represents the exhaust gas pressure that is produced by the engine to overcome the hydraulic resistance of an exhaust system in order to discharge gases into the atmosphere. In some cases, the measured EIDs 429 may overlap the engine parameters 425. One skilled in the art will appreciate that the measured EIDs 429 are not limited to the foregoing example parameters. In some cases, the measured EIDs 429 can be included, in whole or in part, in data received, for example, from the rotorcraft 101 of FIG. 1. In addition, or alternatively, the measured EIDs 429 can be computed by the EID modeler 419 based on other portions of the flight data 423.

The mathematical model 431 can include, for example, equations, configurations and/or logic that model how a set of EIDs varies with values of one or more elements of the flight data 423 such as, for example, one or more of the engine parameters 425 and/or one or more of the flight parameters 427. Some of the set of EIDs may have values included in the flight data 423 by way of the measured EIDs 429. The EIDs for which no values are included in the flight data 423 may be referred to herein as unmeasured EIDs. In an example, the measured EIDs 429 might include inlet pressure change, thereby leaving inlet temperature change and exhaust backpressure as unmeasured EIDs. In another example, the measured EIDs 429 might include inlet pressure change and inlet temperature change, thereby leaving exhaust backpressure as an unmeasured EID.

The engine profile 433 can include data about an engine such as one or more the engines 115 of FIG. 1. The engine profile 433 can include, for example, data related to power available, power required, and/or power margin for the engine in its installed state. For example, the engine performance profiler 421 can iterate on parameters used in the mathematical model 431 to generate the engine profile 433 on a repeatable or on-demand basis.

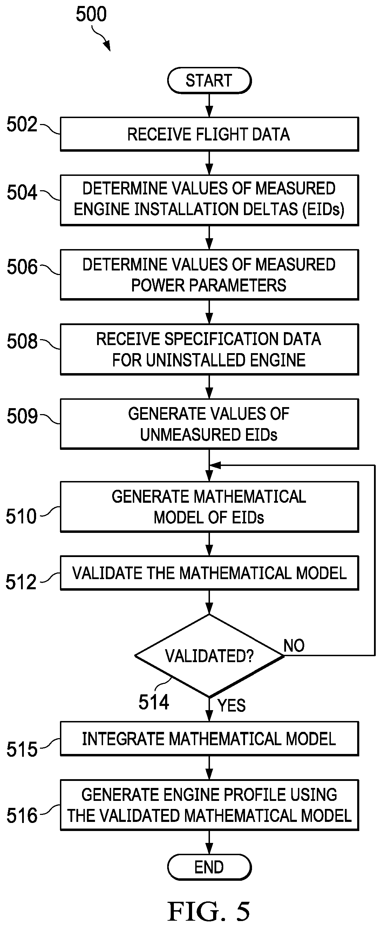

FIG. 5 illustrates an embodiment of a process 500 for modeling and integrating EIDs according to the present invention. The process 500 can be executed by the data server 305 of FIG. 3, the data terminal 303 of FIG. 3, the modeling integration system 317 of FIGS. 3 and 4, a component of the foregoing, and/or another component. The process 500, or portions thereof, is embodied in a software program stored on a non-transitory computer-readable storage medium that can be executed by a processor of the data terminal 303 and a processor of the data server 305. The process 500 can also be executed generally by the computing environment 301 of FIG. 3. Although the process 500 can be executed by any number of different components, to simplify discussion, the process 500 will be described as being performed by the modeling integration system 317 and/or components thereof as shown in FIG. 4.

At block 502, the EID modeler 419 receives at least a portion of the flight data 423. In some cases, the flight data 423 may result from one or more test flights involving, for example, the rotorcraft 101 of FIG. 1. At block 504, the EID modeler 419 determines values of the measured EIDs 429. The values of the measured EIDs 429 can be determined directly from the flight data 423, for example, by retrieving such values from the data received at the block 502. In addition, or alternatively, some or all of the values of the measured EIDs 429 can be determined by computing or calculating such values from other values in the flight data 423.

At block 506, the EID modeler 419 determines values of the measured power parameters 428. As with the measured EIDs 429, in various cases, the values of the measured power parameters 428 can be determined by retrieving such values from the flight data 423 and/or by computing or calculating such values from other values in the flight data 423. More generally, the values of the measured power parameters 428 represent a power situation for the engine as installed, for example, in the rotorcraft 101 of FIG. 1.

At block 508, the EID modeler 419 receives specification data for the engine in its uninstalled state. The specification data can be, for example, data extracted from a minimum specification from a manufacturer of the engine. The specification data can include, for example, power parameters for the engine in its uninstalled state, where the power parameters are of a similar form to the measured power parameters 428.

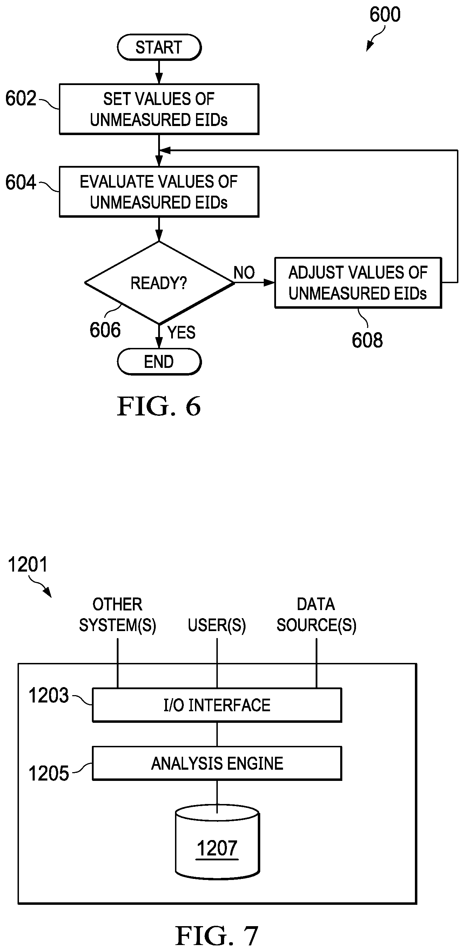

At block 509, the EID modeler 419 establishes values of unmeasured EIDs. The EID modeler 419 may include logic for establishing the values of the unmeasured EIDs, at least in part, from other parameters represented in the flight data 423. The values of the unmeasured EIDs can be established, at least in part, via user input. An example of establishing the values of the unmeasured EIDs will be described in greater detail relative to FIG. 6.

At block 510, the EID modeler 419 generates the mathematical model 431 of EIDs, inclusive of both the measured EIDs and the unmeasured EIDs, as a function of one or more parameters of the flight data 423. The mathematical model 431 may be generated, for example, as a function of one or more of the engine parameters 425 and/or as a function of one or more of the flight parameters 427. In an example, the mathematical model 431 may be generated as a function of Ng or Ngc.

At block 512, the EID modeler 419 validates the mathematical model 431 based on the specification data, the values of the measured power parameters 428, the values of the measured EIDs 429, and/or other data. For example, the validation at the block 512 can include the EID modeler 419 causing the engine performance profiler 421 to compute two sets of power-parameter values: a first set using the values of the measured EIDs 429 and a second set based on model-computed values of both the measured EIDs 429 and unmeasured EIDs according to the mathematical model 431. According to this example, as part of validation, the EID modeler 419 can compare the two sets of power-parameter values. More specifically, the EID modeler 419 can compare extents to which the two sets of power-parameter values vary with the values of the one or more parameters of the flight data 423 utilized in the mathematical model 431 (e.g., Ng or Ngc). If the two sets of power-parameter values are not sufficiently close, as measured by any applicable mathematical or statistical threshold, the validation at the block 512 may be considered unsuccessful. Otherwise, the validation may be considered successful.

At decision block 514, the EID modeler 419 determines whether the validation at the block 512 was successful. If not, the process 500 returns to block 510, where the mathematical model 431 may be re-generated or modified in view of the failed validation. If it is determined at the decision block 514 that the validation at the block 512 was successful, the process 500 proceeds to block 515.

At block 515, the EID modeler 419 integrates the mathematical model 431 with the engine performance profiler 421. In general, the integration at the block 515 enables the engine performance profiler 421 to use the mathematical model 431 to generate data provided in engine performance profiles, such as the engine profile 433, given specific input data. The input data can include, for example, values of engine parameters, flight parameters, or any other parameter utilized in the mathematical model 431. In an example, the integration at the block 515 can include the EID modeler 419 instructing or causing the engine performance profiler 421 to point to, or reference, the mathematical model 431 (and/or data related thereto) for particular data points (e.g., EIDs) that are relied upon to generate engine profiles such as the engine profile 433. In another example, the integration at the block 515 can include the EID modeler 419 causing the engine performance profiler 421 to call a function of the EID modeler 419 for such particular data points. In yet another example, the integration at the block 515 can include the EID modeler 419 tying its own interface to the engine performance profiler 421, with the EID modeler 419 calling functions or referencing data of the engine performance profiler 421. One skilled in the art will appreciate other ways to accomplish the integration after a detailed review of the present disclosure.

At block 516, the engine performance profiler 421 and the EID modeler 419 generate the engine profile 433 using the mathematical model 431 as validated. The engine profile 433 can include, for example, granular data regarding power available, power required, and power margin as a function of the one or more parameters of the flight data 423 utilized by the mathematical model 431. More generally, as a result of the integration at the block 515, the engine profile 433 includes such data for the engine in its installed state. The engine profile 433 may serve as a performance card for the engine, to be used as part of a performance card deck of similar engine profiles. In some cases, the engine profile 433 can include a power assurance chart for the engine. The EID modeler 419 causes the generation of the engine profile 433 via the integration described previously relative to the block 515. After block 516, the process 500 ends.

The engine profiling described relative to block 516 is representative of on-demand engine profiling, using the mathematical model 431, that can be executed at any time for input data such as engine parameters, flight parameters, or other parameters utilized by the mathematical model 431. As a result of the integration described relative to the block 515, the engine performance profiler 421 and/or the EID modeler 419 are able to execute automatic profiling without any need for separate manual entry of calculated EIDs for such input data. Rather, the engine performance profiler 421 can iterate on the input data based on the mathematical model 431 and generate an engine profile such as the engine profile 433. As described previously, the engine profile 433 can thereby include, for the input data, data related to power available, power required and/or power margin, as well as other data, for the engine in its installed state

FIG. 6 illustrates an example of a process 600 for establishing values of unmeasured EIDs. The process 600 can be executed, for example, by the data server 305 of FIG. 3, the data terminal 303 of FIG. 3, the modeling integration system 317 of FIGS. 3 and 4, a component of the foregoing, and/or another component. The process 600, or portions thereof, may be embodied in a software program stored on a non-transitory computer-readable storage medium that is executed by a processor of the data terminal 303 and a processor of the data server 305. The process 600 can also be executed generally by the computing environment 301 of FIG. 3. Although the process 600 can be executed by any number of different components, to simplify discussion, the process 600 will be described as being performed by the modeling integration system 317 and/or components thereof as shown in FIG. 4. The process 600 can be performed as all or part of the block 509 of the process 500 of FIG. 5.

At block 602, the EID modeler 419 sets the values of the unmeasured EIDs. The values can be default values, calculated values from the flight data 423, values received from a user, combinations of the foregoing and/or the like.

At block 604, the EID modeler 419 evaluates the values determined at the block 602 using the specification data (e.g., from block 508 of FIG. 5), the values of the measured power parameters 428, the values of the measured EIDs 429, and/or other data. For example, the evaluation at the block 604 can include the EID modeler 419 computing power-parameter values using the values of the unmeasured EIDs in combination with other data such as, for example, the specification data and the values of the measured EIDs 429. According to this example, as part of the evaluation, the EID modeler 419 can compare the computed power-parameter values to the values of the measured power parameters 428. More specifically, the EID modeler 419 can compare extents to which the computed power-parameter values and the values of the measured power parameters 428 vary with the values of the one or more parameters of the flight data 423 utilized in the mathematical model 431 (e.g., Ng or Ngc). If the computed power-parameter values are not sufficiently close to the values of the measured power parameters 428, as measured by any applicable mathematical or statistical threshold, the values of the unmeasured EIDs may require adjustment. Otherwise, the values of the unmeasured EIDs may be considered ready for use in model generation.

At decision block 606, the EID modeler 419 determines whether the values of the unmeasured EIDs are ready for use in model generation. If so, the process 600 ends. Otherwise, if it is determined at the decision block 606 that the values of the unmeasured EIDs are not ready for use in model generation, the process 600 proceeds to block 608, where one or more of the values of the unmeasured EIDs are adjusted. The values may be algorithmically adjusted according to an equation or formula, with the equation or formula in some cases utilizing computations or data generated during the evaluation at the block 604. In addition, or alternatively, the EID modeler 419 may interact with a user to make the above-referenced adjustment. From block 608, the process 600 returns to the block 604 and executes as described previously with the adjusted values of the unmeasured EIDs. The values of the unmeasured EIDs can be iteratively adjusted until such values are deemed to be ready for use.

FIG. 7 is a diagram illustrating a computer system 1201 that may be used to implement a system, data terminal, or data server. The computer system 1201 can include an input/output (I/O) interface 1203, an analysis engine 1205, and a database 1207. Alternatives can combine or distribute the I/O interface 1203, the analysis engine 1205, and the database 1207, as desired. The computer system 1201 may include one or more computers that include one or more processors and memories configured for performing tasks described herein. This can include, for example, a computer having a central processing unit (CPU) and non-volatile memory that stores software instructions for instructing the CPU to perform at least some of the tasks described herein. This can also include, for example, two or more computers that are in communication via a computer network, where one or more of the computers include a CPU and non-volatile memory, and one or more of the computer's non-volatile memory stores software instructions for instructing any of the CPU(s) to perform any of the tasks described herein. Thus, while the computer system 1201 is described in terms of a discrete machine, it should be appreciated that this description is nonlimiting, and that the present description applies equally to numerous other arrangements involving one or more machines performing tasks distributed in any way among the one or more machines. It should also be appreciated that such machines need not be dedicated to performing tasks described herein, but instead can be multi-purpose machines, for example computer workstations, that are suitable for also performing other tasks.

The I/O interface 1203 can provide a communication link between external users, systems, and data sources and components of the computer system 1201. The I/O interface 1203 can be configured for allowing one or more users to input information to the computer system 1201 via any known input device. Examples can include a keyboard, mouse, touch screen, and/or any other desired input device. The I/O interface 1203 can be configured for allowing one or more users to receive information output from the computer system 1201 via any known output device. Examples can include a display monitor, a printer, cockpit display, and/or any other desired output device. The I/O interface 1203 can be configured for allowing other systems to communicate with the computer system 1201. For example, the I/O interface 1203 can allow one or more remote computer(s) to access information, input information, and/or remotely instruct the computer system 1201 to perform one or more of the tasks described herein. The I/O interface 1203 can be configured for allowing communication with one or more remote data sources. For example, the I/O interface 1203 can allow one or more remote data source(s) to access information, input information, and/or remotely instruct the computer system 1201 to perform one or more of the tasks described herein.

The database 1207 provides persistent data storage for the computer system 1201. Although the term "database" is primarily used, a memory or other suitable data storage arrangement may provide the functionality of the database 1207. The database 1207 can be integral to or separate from the computer system 1201 and can operate on one or more computers. The database 1207 preferably provides non-volatile data storage for any information suitable to support the operation of the FBW flight control system 201 and the process 500, including various types of data discussed further herein. The analysis engine 1205 can include various combinations of one or more processors, memories, and software components.

Herein, reference to a computer-readable storage medium encompasses one or more tangible computer-readable storage media possessing structures. As an example, and not by way of limitation, a computer-readable storage medium may include a semiconductor-based or other integrated circuit (IC) (such, as for example, a field-programmable gate array (FPGA) or an application-specific IC (ASIC)), a hard disk, an HDD, a hybrid hard drive (HHD), an optical disc, an optical disc drive (ODD), a magneto-optical disc, a magneto-optical drive, a floppy disk, a floppy disk drive (FDD), magnetic tape, a holographic storage medium, a solid-state drive (SSD), a RAM-drive, a SECURE DIGITAL card, a SECURE DIGITAL drive, a flash memory card, a flash memory drive, or any other suitable tangible computer-readable storage medium or a combination of two or more of these, where appropriate.

Herein, reference to encoded software may encompass one or more applications, bytecode, one or more computer programs, one or more executables, one or more instructions, logic, machine code, one or more scripts, or source code, and vice versa, where appropriate, that have been stored or encoded in a computer-readable storage medium. Encoded software may include one or more application programming interfaces (APIs) stored or encoded in a computer-readable storage medium. Any suitable encoded software may be written or otherwise expressed in any suitable programming language or combination of programming languages stored or encoded in any suitable type or number of computer-readable storage media. Encoded software may be expressed as source code or object code. Encoded software may be expressed in a higher-level programming language, such as, for example, C, Perl, or a suitable extension thereof.

Encoded software may be expressed in a lower-level programming language, such as assembly language (or machine code). Encoded software may be expressed in JAVA. Encoded software may be expressed in Hyper Text Markup Language (HTML), Extensible Markup Language (XML), or other suitable markup language. The foregoing description has been presented for purposes of illustration and description. It is not intended to be exhaustive or to limit the disclosure to the precise form disclosed, and modifications and variations are possible in light of the above teachings or may be acquired from practice of the disclosure. The embodiments were chosen and described in order to explain the principals of the disclosure and its practical application to enable one skilled in the art to utilize the disclosure in various embodiments and with various modifications as are suited to the particular use contemplated. Other substitutions, modifications, changes and omissions may be made in the design, operating conditions and arrangement of the embodiments without departing from the scope of the invention, as defined by the appended claims.

Depending on the embodiment, certain acts, events, or functions of any of the algorithms described herein can be performed in a different sequence, can be added, merged, or left out altogether (e.g., not all described acts or events are necessary for the practice of the algorithms). Moreover, in certain embodiments, acts or events can be performed concurrently, e.g., through multi-threaded processing, interrupt processing, or multiple processors or processor cores or on other parallel architectures, rather than sequentially. Although certain computer-implemented tasks are described as being performed by a particular entity, other embodiments are possible in which these tasks are performed by a different entity.

Conditional language used herein, such as, among others, "can," "might," "may," "e.g.," and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include logic for deciding, with or without author input or prompting, whether these features, elements and/or states are included or are to be performed in any particular embodiment.

While the above detailed description has shown, described, and pointed out novel features as applied to various embodiments, it will be understood that various changes in the form and details of the devices or algorithms illustrated can be made without departing from the invention, which is defined by the appended claims.

## Claims

1. A computer-implemented method (500) of modeling and integrating aircraft engine installation deltas (EIDs) using a computing environment (301) comprising a data terminal (303) connected to a data server (305) and to one or more aircraft sensors (307) that indicate one or more operational conditions, the data server (305) collecting data for aggregation and analysis and including a modeling integration system (317) that periodically receives condition indicator data and other data, models EIDs and integrates such modeling with systems that profile engines, the modeling integration system including an EID modeler (419) and an engine performance profiler (421), the method comprising:
receiving (502) by the EID modeler (419) flight data (423) related to an aircraft (101) comprising an engine (115) installed therein, the flight data (423) comprising values for engine parameters (425), flight parameters (427), power parameters (428) and measured EIDs (429);
determining (504) by the EID modeler (419) values of the measured EIDs (429) for the engine (115) based, at least in part, on the flight data (423);
determining (506) by the EID modeler (419) values of measured power parameters (428) for the engine (115) based, at least in part, on the flight data (423);
receiving (508) by the EID modeler (419) specification data for the engine (115) in its uninstalled state;
establishing (509) by the EID modeler (419) values of unmeasured EIDs, an unmeasured EID being an EID for which no values are included in the flight data (423);
generating (510) by the EID modeler (419) a mathematical model of a plurality of EIDs for the engine (115) as a function of one or more of the engine parameters (425), wherein the plurality of EIDs comprise the measured EIDs (429) and the unmeasured EIDs;
validating (512) by the EID modeler (419) the mathematical model based, at least in part, on the values of the measured installation delta (429);
determining (514) by the EID modeler (419) whether the validation was successful;
if the validation was successful, integrating (515) by the EID modeler (419) the validated mathematical model with an engine performance profiling program; and
generating (516) by the EID modeler (419) and engine performance profiler (421) a performance profile (433) of the engine (115) in its installed state using the validated mathematical model (431) based, at least in part, on one or more input values for the engine parameter.

2. The method of claim 1, wherein establishing (509) values of unmeasured EIDs comprises:
setting the values of the unmeasured EID; and
iteratively adjusting the values of the unmeasured EID.

3. The method of claim 2, wherein iteratively adjusting the values of the unmeasured EID comprises:
algorithmically adjusting the values of the unmeasured EID; and/or
interacting with a user to adjust the values of the unmeasured EID.

4. The method of claim 2, wherein iteratively adjusting the values of the unmeasured EID comprises:
computing power-parameter values using the values of the unmeasured EID; and
comparing the computed power-parameter values to the values of the measured power parameter.

5. The method of claim 4, wherein comparing the computed power-parameter values to the values of the measured power parameter comprises comparing:
an extent to which the values of the measured power parameter varies with the values of the engine parameter; and
an extent to which the computed power-parameter values vary with the values of the engine parameter.

6. The method of claim 1, wherein the performance profile of the engine (115) comprises data related to at least one of power margin, power available and power required.

7. The method of claim 1, wherein determining (504) the values of the measured EID comprises:
retrieving the values of the measured EID from the flight data (423); and/or
computing the values of the measured EID from other values in the flight data (423).

8. The method of claim 1, wherein determining (506) the values of the measured power parameter comprises:
retrieving the values of the measured power parameter from the flight data (423); and/or
computing the values of the measured power parameter from other values in the flight data (423).

9. The method of claim 1, wherein the unmeasured EID comprises engine exhaust backpressure.

10. The method of claim 1, wherein validating (512) the mathematical model comprises:
causing a first set of power-parameter values to be generated using the values of the measured EID;
causing a second set of power-parameter values to be generated using model-computed values of both the measured EID and the unmeasured EID; and
comparing the first set of power-parameter values to the second set of power-parameter values.

11. A computer system (1201) comprising a computer including a processor and memory, wherein the processor and the memory in combination are operable to perform the method according to any preceding claim.

12. A computer-program product comprising a non-transitory computer-usable medium comprising instructions which, when executed by the computer, cause the computer to carry out the method according to any one of claims 1 to 10.

## Patentansprüche

1. Computerimplementiertes Verfahren (500) zum Modellieren und Integrieren von Flugtriebwerksinstallationsdeltas (EIDs) unter Verwendung einer Computerumgebung (301), die ein Datenendgerät (303) umfasst, das verbunden ist mit einem Datenserver (305) und einem oder mehreren Flugzeugsensoren (307), die einen oder mehrere Betriebszustände anzeigen, wobei der Datenserver (305) Daten zur Aggregation und Analyse sammelt und ein Modellintegrationssystem (317) einschließt, das regelmäßig Zustandsanzeigedaten und andere Daten empfängt, EIDs modelliert und diese Modellierung in Systeme integriert, die Motoren profilieren, das Modellintegrationssystem einschließlich eines EID-Modellierers (419) und eines Motorleistungsprofilers (421), das Verfahren umfassend:
Empfangen (502) von Flugdaten (423) durch den EID-Modellierer (419), die sich auf ein Flugzeug (101) beziehen, das einen darin installierten Motor (115) umfasst, wobei die Flugdaten (423) Werte für Motorparameter (425), Flugparameter (427), Leistungsparameter (428) und gemessene EIDs (429) umfassen;
Bestimmen (504) durch den EID-Modellierer (419) von Werten des gemessenen EIDs (429) für den Motor (115), zumindest teilweise basierend auf den Flugdaten (423);
Bestimmen (506) durch den EID-Modellierer (419) von Werten gemessener Leistungsparameter (428) für den Motor (115), zumindest teilweise basierend auf den Flugdaten (423);
Empfangen (508) von Spezifikationsdaten für den Motor (115) in seinem nicht installierten Zustand durch den EID-Modellierer (419);
Festlegen (509) von Werten für nicht gemessene EIDs durch den EID-Modellierer (419), wobei ein nicht gemessener EID ein EID ist, für den keine Werte in den Flugdaten (423) eingeschlossen sind;
Erzeugen (510) durch den EID-Modellierer (419) eines mathematischen Modells einer Vielzahl von EIDs für den Motor (115) als Funktion eines oder mehrerer der Motorparameter (425), wobei die Vielzahl von EIDs die gemessenen EIDs (429) und die nicht gemessenen EIDs umfasst;
Validieren (512) des mathematischen Modells, das zumindest teilweise auf den Werten des gemessenen Installationsdeltas (429) basiert, durch den EID-Modellierer (419);
Bestimmen (514) durch den EID-Modellierer (419), ob die Validierung erfolgreich war;
wenn die Validierung erfolgreich war, Integrieren (515) des validierten mathematischen Modells mit einem Motorleistungsprofilierungsprogramm durch den EID-Modellierer (419); und
Erzeugen (516) durch den EID-Modellierer (419) und den Motorleistungsprofiler (421) eines Leistungsprofils (433) des Motors (115) in seinem eingebauten Zustand unter Verwendung des validierten mathematischen Modells (431), das zumindest teilweise auf einem oder mehreren Eingabewerten für den Motorparameter basiert.

2. Verfahren nach Anspruch 1, wobei das Festlegen (509) von Werten nicht gemessener EIDs umfasst:
Festlegen der Werte für das nicht gemessenen EID; und
iteratives Anpassen der Werte für das nicht gemessene EID.

3. Verfahren nach Anspruch 2, wobei das iterative Anpassen der Werte des nicht gemessenen EIDs umfasst:
algorithmisches Anpassen der Werte des nicht gemessenen EIDs; und/oder
Interaktion mit einem Benutzer, um die Werte des nicht gemessenen EIDs anzupassen.

4. Verfahren nach Anspruch 2, wobei das iterative Anpassen der Werte des nicht gemessenen EIDs umfasst:
Berechnen der Rechenleistungs-Parameterwerte unter Verwendung der Werte des nicht gemessenen EIDs; und
Vergleichen der berechneten Leistungsparameterwerte mit den Werten der gemessenen Leistungsparameter.

5. Verfahren nach Anspruch 4, wobei das Vergleichen der berechneten Leistungsparameterwerte mit den Werten der gemessenen Leistungsparameter das Vergleichen umfasst:
ein Ausmaß, in dem die Werte des gemessenen Leistungsparameters mit den Werten des Motorparameters variieren; und
inwieweit die berechneten Leistungs-Parameter-Werte mit den Werten des Motorparameters variieren.

6. Verfahren nach Anspruch 1, wobei das Leistungsprofil des Motors (115) Daten umfasst, die sich auf mindestens eines von Leistungsreserve, verfügbarer Leistung und erforderlicher Leistung beziehen.

7. Verfahren nach Anspruch 1, wobei das Bestimmen (504) der Werte des gemessenen EIDs umfasst:
Abrufen der Werte des gemessenen EIDs aus den Flugdaten (423); und/oder
Berechnen der Werte des gemessenen EIDs aus anderen Werten in den Flugdaten (423).

8. Verfahren nach Anspruch 1, wobei das Bestimmen (506) der Werte des gemessenen Leistungsparameters umfasst:
Abrufen der Werte des gemessenen Leistungsparameters aus den Flugdaten (423); und/oder
Berechnen der Werte des gemessenen Leistungsparameters aus anderen Werten in den Flugdaten (423).

9. Verfahren nach Anspruch 1, wobei das nicht gemessene EID den Motorabgasgegendruck umfasst.

10. Verfahren nach Anspruch 1, wobei das Validieren (512) des mathematischen Modells umfasst:
Veranlassen, dass ein erster Satz von Leistungsparameterwerten unter Verwendung der Werte des gemessenen EIDs erzeugt wird;
Veranlassen, dass ein zweiter Satz von Leistungsparameterwerten unter Verwendung von modellberechneten Werten sowohl des gemessenen EIDs als auch des nicht gemessenen EIDs erzeugt wird; und
Vergleichen der ersten Gruppe von Leistungsparameterwerten mit der zweiten Gruppe von Leistungsparameterwerten.

11. Computersystem (1201), umfassend einen Computer einschließlich eines Prozessors und eines Speichers, wobei der Prozessor und der Speicher in Kombination betreibbar sind, um das Verfahren nach einem der vorstehenden Ansprüche auszuführen.

12. Computerprogrammprodukt, umfassend ein nicht flüchtiges, computerlesbares Medium, das Befehle umfasst, die, wenn sie von dem Computer ausgeführt werden, den Computer veranlassen, das Verfahren nach einem der Ansprüche 1 bis 10 auszuführen.

## Revendications

1. Procédé (500) mis en oeuvre par ordinateur consistant à modéliser et à intégrer des deltas d'installation de moteur (EID) d'aéronef
en utilisant un environnement informatique (301) comprenant un terminal de données (303) connecté à un serveur (305) de données et à un ou plusieurs capteurs (307) d'aéronef qui indiquent une ou plusieurs conditions opérationnelles, le serveur (305) de données collectant des données pour regroupement et analyse et incluant un système d'intégration par modélisation (317) qui reçoit périodiquement des données d'indication de condition et d'autres données, modélise les EID et intègre une telle modélisation à des systèmes qui profilent des moteurs, le système d'intégration par modélisation incluant un modeleur (419) d'EID et un profileur (421) de performance de moteur, le procédé comprenant :
la réception (502), par le modeleur (419) d'EID, de données de vol (423) associées à un aéronef (101) comprenant un moteur (115) installé dans ce dernier, les données de vol (423) comprenant des valeurs pour paramètres de moteur (425), paramètres de vol (427), paramètres de puissance (428) et EID mesurés (429) ;
la détermination (504), par le modeleur (419) d'EID, de valeurs des EID mesurés (429) pour le moteur (115) sur la base, au moins en partie, des données de vol (423) ;
la détermination (506), par le modeleur (419) d'EID, de valeurs de paramètres de puissance (428) mesurés pour le moteur (115) sur la base, au moins en partie, des données de vol (423) ;
la réception (508), par le modeleur (419) d'EID, de données de spécification pour le moteur (115) dans son état non installé ;
l'établissement (509), par le modeleur (419) d'EID, de valeurs d'EID non mesurées, un EID non mesuré étant un EID pour lequel aucune valeur n'est incluse dans les données de vol (423) ;
la génération (510), par le modeleur (419) d'EID, d'un modèle mathématique d'une pluralité d'EID pour le moteur (115) en fonction d'un ou plusieurs des paramètres de moteur (425), dans lequel la pluralité d'EID comprennent les EID mesurés (429) et les EID non mesurés ;
la validation (512), par le modeleur (419) d'EID, du modèle mathématique sur la base, au moins en partie, des valeurs du delta d'installation mesuré (429) ;
le fait de déterminer (514), par le modeleur (419) d'EID, si la validation a réussi ;
si la validation a réussi, l'intégration (515), par le modeleur (419) d'EID, du modèle mathématique validé avec un programme de profilage de performance de moteur ; et
la génération (516), par le modeleur (419) d'EID et le profileur (421) de performance de moteur, d'un profil de performance (433) du moteur (115) dans son état installé en utilisant le modèle mathématique validé (431) sur la base, au moins en partie, d'une ou plusieurs valeurs d'entrée pour le paramètre de moteur.

2. Procédé selon la revendication 1, dans lequel l'établissement (509) de valeurs d'EID non mesurées comprend :
le réglage des valeurs de l'EID non mesuré ; et
l'ajustement itératif des valeurs de l'EID non mesuré.

3. Procédé selon la revendication 2, dans lequel l'ajustement itératif des valeurs de l'EID non mesuré comprend :
l'ajustement de façon algorithmique des valeurs de l'EID non mesuré ; et/ou
l'interaction avec un utilisateur pour ajuster les valeurs de l'EID non mesuré.

4. Procédé selon la revendication 2, dans lequel l'ajustement itératif des valeurs de l'EID non mesuré comprend :
le calcul de valeurs de paramètre de puissance en utilisant les valeurs de l'EID non mesuré ; et
la comparaison des valeurs de paramètre de puissance calculées aux valeurs du paramètre de puissance mesuré.

5. Procédé selon la revendication 4, dans lequel la comparaison des valeurs de paramètre de puissance calculées aux valeurs du paramètre de puissance mesuré comprend la comparaison :
d'une étendue sur laquelle les valeurs du paramètre de puissance mesuré varient avec les valeurs du paramètre de moteur ; et
d'une étendue sur laquelle les valeurs de paramètre de puissance calculées varient avec les valeurs du paramètre de moteur.

6. Procédé selon la revendication 1, dans lequel le profil de performance du moteur (115) comprend des données associées à au moins une parmi la marge de puissance, la puissance disponible et la puissance requise.

7. Procédé selon la revendication 1, dans lequel la détermination (504) des valeurs de l'EID mesuré comprend :
l'extraction, des données de vol (423), des valeurs de l'EID mesuré ; et/ou
le calcul des valeurs de l'EID mesuré à partir d'autres valeurs dans les données de vol (423).

8. Procédé selon la revendication 1, dans lequel la détermination (506) des valeurs du paramètre de puissance mesuré comprend :
l'extraction, des données de vol (423), des valeurs du paramètre de puissance mesuré ; et/ou
le calcul des valeurs du paramètre de puissance mesuré à partir d'autres valeurs dans les données de vol (423).

9. Procédé selon la revendication 1, dans lequel l'EID non mesuré comprend une contre-pression d'échappement de moteur.

10. Procédé selon la revendication 1, dans lequel la validation (512) du modèle mathématique comprend :
le fait d'entraîner la génération d'un premier ensemble de valeurs de paramètre de puissance en utilisant les valeurs de l'EID mesuré ;
le fait d'entraîner la génération d'un deuxième ensemble de valeurs de paramètre de puissance en utilisant des valeurs calculées sur modèle à la fois de l'EID mesuré et de l'EID non mesuré ; et
la comparaison du premier ensemble de valeurs de paramètre de puissance au deuxième ensemble de valeurs de paramètre de puissance.

11. Système informatique (1201) comprenant un ordinateur incluant un processeur et une mémoire, dans lequel le processeur et la mémoire, en combinaison, servent à mettre en œuvre le procédé selon une quelconque revendication précédente.

12. Produit de programme informatique comprenant un support non transitoire utilisable par ordinateur comprenant des instructions qui, lorsqu'elles sont mises en œuvre par l'ordinateur, amènent l'ordinateur à mettre en œuvre le procédé selon l'une quelconque des revendications 1 à 10.
